(19) **Europäisches Patentamt**

**European Patent Office**

**Office européen des brevets**

(11) **EP 1 168 757 A1**

(12) **EUROPEAN PATENT APPLICATION**

(43) Date of publication:
**02.01.2002 Bulletin 2002/01**

(51) Int Cl.7: **H04L 29/06**, H04L 12/64

(21) Application number: **00850112.4**

(22) Date of filing: **20.06.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **TELEFONAKTIEBOLAGET L M ERICSSON (publ)**
**126 25 Stockholm (SE)**

(72) Inventor: **Szab , István**
**1037 Budapest (HU)**

(74) Representative: **Bjelkstam, Peter et al**
**Bergenstrahle & Lindvall AB, Box 17704**
**118 93 Stockholm (SE)**

(54) **Packet multiplexing using a dynamic buffer delay timer**

(57) In a method and a system for multiplexing packets into a single packet, in particular an RTP packet, the transmission and queuing delay of the core network over which the single packet is to be transmitted is estimated. The timer time controlling the multiplexing process is then set dynamically based upon values obtained in the estimation. Thus, the bandwidth efficiency is optimised in the RTP multiplexing without jeopardising the delay performance of the core network using a dynamically updates timer value to control the multiplexing process.

FIG.2

**EP 1 168 757 A1**

# Description

## TECHNICAL FIELD

The present invention relates to a method and a system for setting up a connection in an Internet Protocol (IP) network. In particular the present invention relates to a method and a system for improving the bandwidth efficiency for traffic transmitted over an IP core network.

## BACKGROUND OF THE INVENTION AND PRIOR ART

Today there is a demand for services offering real time traffic over an Internet Protocol (IP) network. For example when establishing a connection for IP-telephony, the users demand real time traffic.

In order to meet this demand a transport protocol termed RTP has been developed for carrying real time traffic over an Internet Protocol (IP) network. The RTP is described in H.Schulzrinne et al.: "RTP: A Transport Protocol for Real-Time Applications, RFC 1889, January, 1996. The paper by H. H.Schulzrinne also describes a mechanism termed RTCP used for gathering statistics about an RTP session. The RTCP can collect and output information regarding statistics such as delay, jitter and packet-loss ratio.

Recently it has been proposed to extend the RTP enabling multiplexing of low bit-rate compressed voice steams from different sources into a single RTP packet. Such a multiplexing would result in a significant reduction of bits used for header information. The method is primarily applicable between Internet Protocol (IP) telephony gateways handling large amounts of simultaneous calls.

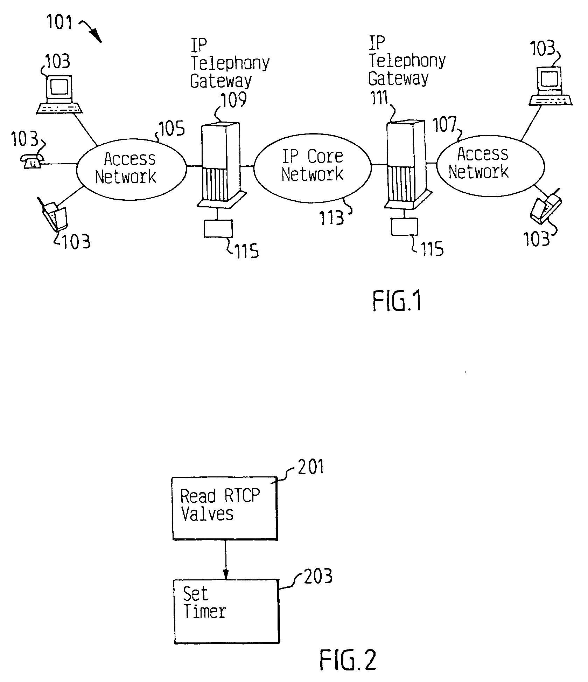

Thus, when setting up a call over an Internet Protocol (IP) network, the following steps will then be performed. First a call is initiated from a subscriber over an Access Network (AN), see Fig. 1. The Access Network is connected to an Internet Protocol (IP) telephony gateway, which communicates with other Internet Protocol (IP) telephony gateways over an Internet Protocol (IP) core network.

The gateway, which receives packets from many subscribers multiplexes packets from multiple sources which packets are destined- to the same remote Access Network. The packets are multiplexed into a single RTP/UDP(User Datagram Protocol)/IP (Internet Protocol) packet and transmitted over the IP core network to a remote IP telephony gateway where demultiplexing is performed.

In such a system the higher the number of sources that are multiplexed into a single RTP/UDP/IP packet, the higher the gain in terms of header overhead becomes. This is a desired property since the usage of the available bandwidth becomes more efficient. However, in some cases the time waiting for enough incoming packets to assemble into one RTP/UDP/IP packet may be long.

Thus, if the waiting time becomes too long the delay for the source initiating the first packet may be unacceptable. This is due to that in the present solution the multiplexing process is controlled by a timer having a fix value, see B. Subbiah, S. Sengdan: "User multiplexing in RTP payload between IP Telephony Gateways", Internet Draft, August, 1998.

Thus, when a first packet arrives, the timer is started and the multiplexed packet is transmitted when a maximum time has expired. Hence, if the maximum timer time is chosen to be short a poor bandwidth efficiency will be obtained, and if a long timer time is chosen there will be a possible unacceptable delay for the first packet.

## SUMMARY

It is an object of the present invention to overcome the problems as outlined above and to provide a method and a system, which can provide an efficient usage of the bandwidth and at the same time perform RTP packet multiplexing without causing a too long packet delay in the multiplexing gateway.

This object and others are obtained by a method and a system wherein the timer in the Internet Protocol (IP) telephony gateway is adaptively set using statistics collected about the network .

Thus, RTCP offers the following timing indicators:

- **NTP_Timestamp** indicates the time when a particular report is generated.
- **Last SR Timestamp (LSR)** is extracted from the NTP_Timestamp of the last report received in the other direction.
- **Delay Since Last SR (DLSR)** indicates the time elapsed between the time of receipt of the last report and the time when the current report is generated.

These values are generated on a regular basis, and in the multiplexing case, upon the arrival of a report, it is used to estimate the transmission and queuing delay.

The timer time is then set dynamically based upon the values in the latest report. However, if in some application it should turn out to use another mechanism, than RTCP for monitoring ongoing calls this mechanism could of cause be used instead or as a supplement.

Thus, the bandwidth efficiency is optimised in the RTP multiplexing without jeopardising the delay performance of the core network using a dynamically updated timer value to control the multiplexing process.

BRIEF DESCRIPTION OF THE DRAWINGS

The present invention will now be described in more detail and with reference to the accompanying drawings, in which:

- Fig. 1 is a general view of an Internet telephony network, and
- Fig. 2 is a flowchart illustrating different steps carried out when setting the timer time determining the maximum time for assembling an RTP packet in an IP telephony gateway.

DESCRIPTION OF PREFERRED EMBODIMENTS

In Fig. 1, a general view of an Internet telephony network 101 is shown. The network 101 comprises a number of subscribers 103 connected to a number of Access Networks (AN), such as the Access Networks 105 and 107. Each Access Network is connected to an Internet Protocol (IP) telephony gateway. In the example shown in Fig. 1, the Access Network 105 is connected to an IP telephony gateway 109, and the Access Network 107 is connected to an IP telephony gateway 111. The IP telephony gateways 109 and 111 are interconnected by an Internet Protocol (IP) core network 113.

Furthermore, each of the gateways 109 and 111 has access to the RTCP mechanism and timer setting logic as indicated by the reference numeral 115.

In Fig.2, a flowchart illustrating different steps performed in an IP telephony gateway as shown in Fig. 1, when setting the RTP multiplexing timer time is shown. First, in a step 201, an estimation of the transmission and queuing delay D in the IP core network is calculated as:

$$D = NTP\_Timestamp - LSR - DLSR$$

Next, in a step 203, the timer time T for multiplexing RTP packets is then set to:

$$T = D_{MAX} - D$$

Where $D_{MAX}$ is the maximum acceptable delay in the IP core network.

In another preferred embodiment the average time for the delay caused by transmission and queuing, and calculated over subsequent receipt of RTCP reports can be used instead of the latest values in the RTCP reports. This can be advantageous when one wants to obtain a safety margin for peaks in the delay D. As an alternative it is possible to include a constant or varying safety margin directly in the delay D.

Also, yet another alternative of calculating the delay D is that the peer IP telephony gateway calculates an average delay based on the delay of each individual multiplexed packet transmitted during the time interval between subsequent report packets, and sends the result of the calculation in the report packets.

The method as described herein is not limited to an RTP multiplexing scheme, but can be implemented in other environments as well. For example, the method can be used in ATM/AAL2 multiplexing. Also, the method as described herein can be used in a multiplexing scheme such as the scheme described in B. Thompson et al. "Tunnelling Multiplexed Compressed RTP", Internet Draft, March 2000, Work in Progress, according to which a multitude of RTP/UDP/IP packets are compressed and then multiplexed into a so called PPP packet before being transmitted over an IP core network.

**Claims**

1. A method of multiplexing packets from different subscribers into one single packet to be transmitted over a core network, wherein the maximum time used for multiplexing the packets into the single packet is set by a timer, **characterized by** the steps of:

   - reading timing indicator values corresponding to the status of the core network, and
   - dynamically setting the timer in response to the timing indicator values.

2. A method according to claim 1, **characterized in that** the timing indicator values used are RTCP values corresponding to the status of an Internet Protocol (IP) core network.

3. A system for multiplexing packets from different subscribers into one single packet to be transmitted over a core network, wherein the maximum time used for multiplexing the packets into the single packet is set by a timer, **characterized by:**

   - means for reading timing indicator values corresponding to the status of the core network,
   - means for dynamically setting the timer in response to the timing indicator values, and
   - means for multiplexing traffic from different subscribers in response to the timer time.

101

103

IP Telephony Gateway
109

105

Access Network

IP Core Network

IP Telephony Gateway
111

107

Access Network

103

103

103

113

115

103

115

103

FIG.1

Read RTCP Valves — 201

Set Timer — 203

FIG.2

EP 1 168 757 A1

| | European Patent Office | EUROPEAN SEARCH REPORT | Application Number EP 00 85 0112 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | WO 00 41527 A (NOKIA INTERNET COMMUNICATIONS) 20 July 2000 (2000-07-20) * page 8, line 8 - page 10, line 36 * | 1-3 | H04L29/06 H04L12/64 |
| D,A | B SUBBIAH ET AL: "User Multiplexing in RTP payload between IP Telephony Gateways" XP002127741 * paragraph '02.3! * | 1-3 | |
| A | HOSHI T ET AL: "VOICE STREAM MULTIPLEXING BETWEEN IP TELEPHONY GATEWAYS" IEICE TRANSACTIONS ON INFORMATION AND SYSTEMS,INSTITUTE OF ELECTRONICS INFORMATION AND COMM. ENG. TOKYO,JP, vol. E82-D, no. 4, April 1999 (1999-04), pages 838-845, XP000832566 ISSN: 0916-8532 * paragraph '03.4! * | 1-3 | |
| | | | TECHNICAL FIELDS SEARCHED (Int.Cl.7) H04L |

The present search report has been drawn up for all claims

| Place of search | Date of completion of the search | Examiner |
|---|---|---|
| THE HAGUE | 7 November 2000 | Cremer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

5

## ANNEX TO THE EUROPEAN SEARCH REPORT
## ON EUROPEAN PATENT APPLICATION NO.

EP 00 85 0112

This annex lists the patent family members relating to the patent documents cited in the above–mentioned European search report.
The members are as contained in the European Patent Office EDP file on
The European Patent Office is in no way liable for these particulars which are merely given for the purpose of information.

07-11-2000

| Patent document cited in search report | Publication date | Patent family member(s) | Publication date |
|---|---|---|---|
| WO 0041527 A | 20-07-2000 | NONE | |

For more details about this annex : see Official Journal of the European Patent Office, No. 12/82

EPO FORM P0459